# EUROPEAN PATENT SPECIFICATION

(11) **EP 0 532 834 B1**
(45) Date of publication and mention of the grant of the patent: **13.12.1995**
(21) Application number: 92109294.6
(22) Date of filing: 02.06.1992
(51) Int. Cl.: F16D 3/50

(54) **Flexible coupling with centering device**
Elastische Kupplung mit Zentriervorrichtung
Accouplement élastique avec dispositif de centrage

(30) Priority: 17.09.1991 JP 74391/91 U
(43) Date of publication of application: 24.03.1993
(73) Proprietor: KOYO SEIKO CO., LTD., Chuo-ku Osaka 542 (JP)
(72) Inventor: Atsumi, Toshiyuki, Yamatotakada-shi, Nara (JP); Araki, Satoshi, Koyo Seiko K. K., Kashiwara-shi, Osaka (JP)
(74) Representative: TER MEER STEINMEISTER & PARTNER GbR

(56) References cited:
- DE-A- 2 062 475
- DE-C- 633 702
- FR-A- 2 056 574
- GB-A- 1 104 387
- US-A- 3 437 386
- US-A- 3 989 321
- ANTRIEBSTECHNIK vol. 18, no. 4, 1979, pages 179 - 183 SCHÜTZ,FOLZ 'ZENTRIERUNG DREH- UND BIEGEELASTISCHER KUPPLUNGEN'

## Description

### BACKGROUND OF THE INVENTION

The invention relates to a flexible coupling useful, for example, for the propeller shafts of motor vehicles, according to the preamble of claim 1.

A flexible coupling of this kind is disclosed by the technical journal "Antriebstechnik", volume 18, No. 4, 1979, pages 179 to 183.

Flexible couplings for use with motor vehicle propeller shafts and the like are provided with a vibration absorbing mechanism for absorbing torque pulsations and axial vibration or impact of the drive system, and with a centering mechanism for regulating the deflection of axes of the drive shaft and the driven shaft relative to each other. Such flexible couplings heretofore known include, for example, the one disclosed in Unexamined Japanese Utility Model Publication SHO 63-109032. With the disclosed flexible coupling, a drive shaft is coupled to a driven shaft by an elastic body so as to transmit torque to the driven shaft and to absorb axial vibration, and a centering pin provided on a member attached to one of the shafts is inserted in a pin socket in a member attached to the other shaft with a clearance formed around the pin in the socket. The centering pin is inserted through an inner bush provided on its outer periphery with a bulging spherical portion, which is in bearing contact with a recessed spherical portion formed on the inner periphery of an outer bush (centering seat).

However, the conventional flexible coupling has the problem that the bushes of the centering mechanism backlash, producing a striking noise due to vibration.

### SUMMARY OF THE INVENTION

The main object of the present invention is to provide a flexible coupling having a centering mechanism which makes no backlash.

To comply with this object, the coupling according to the invention is characterized by the features of claim 1.

The present invention provides a flexible coupling which is adapted to couple a first shaft to a second shaft with an elastic body interposed therebetween so as to effect torque transmission between the two shafts and to absorb vibration and wherein a centering pin provided on a member attached to the first shaft is inserted in a pin socket in a member attached to the second shaft with a clearance formed around the pin in the socket, and an outer peripheral spherical portion of a bush having the centering pin inserted therethrough is in bearing contact with an annular centering seat attached to the pin socket, the centering pin being inserted through the bush axially slidably, an elastic member being provided between the bush and the pin socket for axially biasing the bush to press the spherical portion thereof into contact with the inner peripheral surface of the centering seat.

According to the present invention, the inner peripheral surface of the centering seat is a tapered surface.

The bush is circumferentially divided into a plurality of segments.

According to one aspect of the invention, a stopper for the bush is disposed inside the pin socket.

According to another aspect of the invention, the bush, the elastic member and the stopper are accommodated in a tubular case formed with retainers for preventing the bush, the elastic member and the stopper from slipping off, and the case is fitted in the pin socket.

The spherical portion of the bush is pressed into contact with the inner peripheral surface of the centering seat. This precludes the centering mechanism from backlashing to obviate occurrence of striking noise.

The backlashing and striking noise is since the bush comprises a plurality of segments divided circumferentially thereof because when biased into pressing contact with the centering seat by the elastic member, the divided bush is brought into tight pressing contact with the inner peripheral surface of the centering seat and the outer peripheral surface of the centering pin owing to a wedging action.

When a stopper for the bush is provided inside the pin socket, the stopper prevents the bush from moving greatly to ensure centering even if the elastic member breaks.

When the bush, the elastic member and the stopper are accommodated in a tubular case which has retainers for preventing them from slipping off and is adapted to be fitted into the pin socket, the centering mechanism can be assembled merely by assembling these components and inserting the case into the pin socket.

When the inner peripheral surface of the centering seat is recessed to define a space constricted at axial opposite ends of the seat and is fitted around the outer peripheral spherical portion of the bush, the bush is prevented from moving by the recessed seat surface even if the elastic member is broken or damaged. This ensures the contemplated centering function.

### BRIEF DESCRIPTION OF THE DRAWINGS

FIG. 1 is a view in vertical section showing a first embodiment of the invention as applied to a flexible coupling for connecting the output shaft of an engine to an interconnecting shaft;
FIG. 2 is an enlarged view in vertical section showing a portion of FIG. 1, i.e., a centering mechanism;
FIG. 3 is a view in section taken along the line A-A in FIG. 1 and showing an example of centering seat;
FIG. 4 is an enlarged view in vertical section showing the centering mechanism of another flexible coupling as a second embodiment of the invention; and
FIG. 5 is an enlarged view in vertical section showing the centering mechanism of another flexible coupling as a third embodiment of the invention.

### DESCRIPTION OF THE PREFERRED EMBODIMENTS

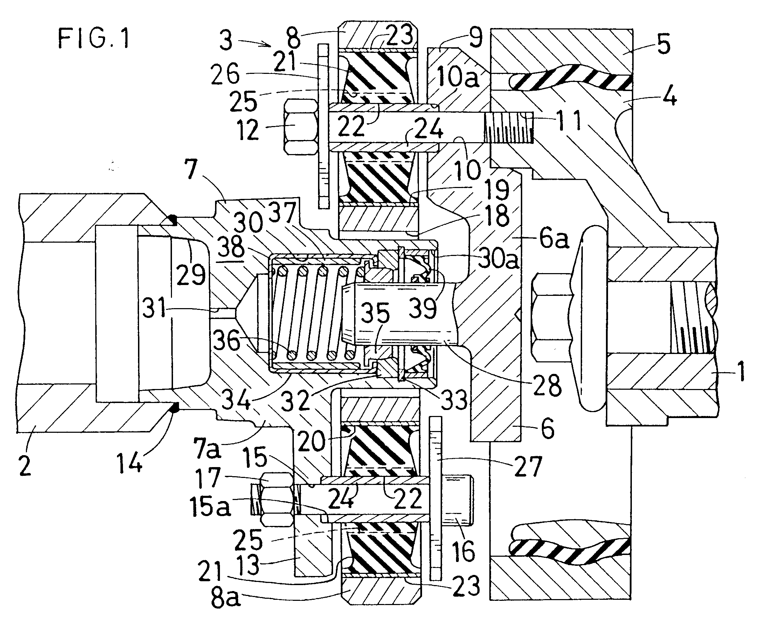

With reference to the drawings, a description will be given of three embodiments of the invention as flexible couplings for coupling the output shaft of a motor vehicle engine to an interconnecting shaft. Throughout the drawings showing these three embodiments, like parts are designated by like reference numerals. In the description to follow, the right-hand side of FIGS. 1, 2, 4 and 5 will be referred to as "front," and the left-hand side thereof as "rear."

FIGS. 1 to 3 show the first of the embodiments.

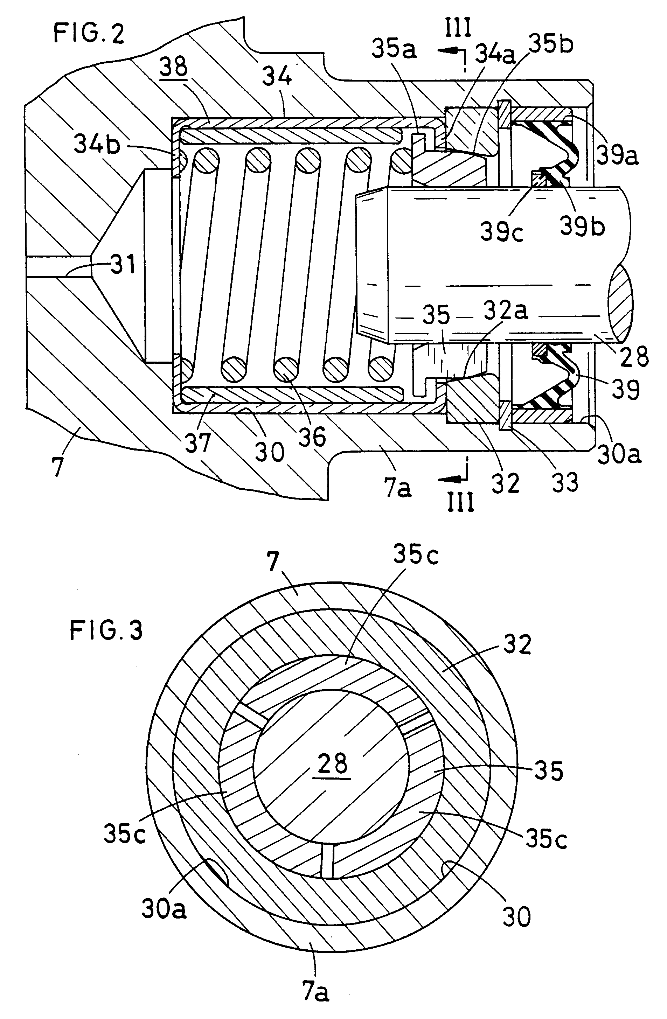

FIG. 1 shows a flexible coupling 3 for coupling the output shaft 1 of an engine to an interconnecting shaft 2. The coupling 3 includes a centering mechanism which is shown in FIG. 2 on an enlarged scale.

A flange 4 is fixed to the rear end of the output shaft 1 and has a pulley 5 attached to the outer periphery of the flange 4. The flange 4 of the output shaft 1 is connected to the front end of the interconnecting shaft 2 by the coupling 3.

The coupling 3 comprises a frist flange member 6 fastened to the flange 4 on the output shaft 1, a second flange member 7 secured to the front end of the interconnecting shaft 2, and an intermediate elastic coupling member 8 for elastically interconnecting these flange members 6, 7. The centering mechanism is provided between the two flange members 6, 7.

The first flange member 6 is made of metal or like rigid material and has a disk portion 6a which is substantially coaxial with the output shaft 1 when the flange member 6 is fixed in position. Three arms 9 extending radially outward from the outer periphery of the disk portion 6a are integral therewith and are equidistantly spaced apart circumferentially thereof. Each of the arms 9 is formed with a bolt hole 10 in parallel to the axis of the disk portion. At the rear end, the bolt hole 10 has an enlarged portion 10a having a slightly larger inside diameter than the other portion thereof. The first flange member 6 is fixed by the flange 4 to the output shaft 1 with three first bolts 12 each inserted through the coupling member 8 and the bolt hole 10 in the arm 9 and screwed into a screw bore 11 in the rear side of the flange 4 as will be described in detail later.

The second flange member 7 is made of metal or like rigid material and has a cylinder portion 7a which is substantially coaxial with the interconnecting shaft 2 when the member 7 is fixed in position. Three arms 13 extend radially outward from the outer periphery of an intermediate part of the cylinder portion 7a integrally therewith and are equidistantly spaced apart circumferentially thereof. The rear end of the second flange member 7 is press-fitted in the interconnecting shaft front end which is hollow, and is secured thereto with a weld 14. Each of the arms 13 is formed with a bolt hole 15 in parallel to the axis of the member 7. At the front end, the bolt hole 15 is formed with an enlarged portion 15a having a slightly larger inside diameter than the other portion thereof. The diameter of pitch circle of the three bolt holes 10 in the first flange member 6 is equal to the diameter of pitch circle of the three bolt holes 15 in the second flange member 7. As will be described below in detail, the second flange member 7 is connected to the coupling member 8 by nuts 17 and second bolts 16 each inserted through the coupling member 8 and the bolt hole 15 of the arm 13.

The coupling member 8 comprises a body 8a in the form of an apertured disk made of metal or like rigid material. The second flange member 7 has a front portion inserted through a center hole 18 in the body 8a with a clearance formed around the front portion in the hole 18. The portion of the body 8a around the center hole 18 is opposed to the rear surfaces of the arms 9 of the first flange member 6 and to the front surfaces of the arms 13 of the second flange member 7. The body 8a of the coupling member 8 is formed on a circumference with three apertures (first apertures) 19 corresponding to the bolt holes 10 in the first flange member 6 and three apertures (second apertures) 20 positioned between the first apertures 19 and corresponding to the bolt holes 15 in the second flange member 7. These apertures 19 and 20 are equidistantly spaced apart along the circumference and each have a rubber or like elastic member 21 fitted therein. The elastic member 21 is in the form of a hollow cylinder having a circular center hole 22 and has a length approximately equal to the axial length of the coupling member body 8a. The elastic member 21 fixedly has around its outer periphery an outer sleeve 23 of rigid material having approximately the same length as the member 21 and fitted in each aperture 19 or 20. An inner sleeve 24 having a larger length than the elastic member 21 is fixedly fitted in the center hole 22 of the member 21 and has front and rear ends projecting beyond the front and rear ends of the elastic member 21, respectively, by a predetermined length. Although not shown in detail, slits 25 extending axially through the elastic member 21 are formed on opposite sides of the center hole 22 of the member 21, i.e., on opposite sides of direction of rotation of the coupling member body 8a (circumferential direction of pitch circle of the apertures 19, 20) so as to permit the elastic member 21 to elastically deform greatly in the direction of rotation.

The front end of inner sleeve 24 of the elastic member 21 in each first aperture 19 is fitted in the enlarged portion 10a of the bolt hole 10 in the first flange member 6, and each first bolt 12 is screwed in the screw hole 11 of the flange 4 through the inner sleeve 24 and the bolt hole 10, whereby the first flange member 6 is fixed to the flange 4, and is connected to the coupling member body 8a with the elastic member 21 provided therebetween. The rear end of inner sleeve 24 of the elastic member 21 in each second aperture 20 is fitted in the enlarged portion 15a of the bolt hole 15 in the second flange member 7, and the second bolt 16 inserted through the inner sleeve 24 and the bolt hole 15 and the nut 17 on the bolt 16 connect the second flange member 7 to the coupling member body 8a with the elastic member 21 provided therebetween. Consequently, the elastic members 21 of the coupling member 8 interconnect the first flange member 6 and the second flange member 7. A predetermined clearance is provided between the first flange member 6 and the coupling member body 8a and also between the second flange member 7 and the body 8a.

A stopper 26 (27) in the form of a rectangular plate and serving also as a washer is held between the bolt 12 (16) and the inner sleeve 24. The lengthwise opposite ends of the stopper 26 or 27 extend at least beyond the outer periphery of the elastic member 21 radially thereof, and are opposed to the end faces of the outer sleeve 23 and the coupling member body 8a and spaced apart therefrom by a given clearance corresponding to the length of projection of the inner sleeve 24 from the elastic member 21.

The centering mechanism is provided between the first flange member 6 and the second flange member 7 in the manner to be described below.

The disk portion 6a of the first flange member 6 is integral with a centering pin 28 extending rearward from the rear surface of the disk portion 6a centrally thereof. The centering pin 28 is in the form of a solid cylinder and has a tapered rear end. The second flange member 7 is concentrically formed with a rear cavity 29 having a relatively short length and a large diameter and extending forward from its rear end face, a pin socket 30 extending rearward from its front end face to a position slightly to the front of the rear cavity 29, and an air vent 31 having a small diameter and holding the cavity in communication with the socket. The pin socket 30 has at the front end thereof a seal accommodating portion 30a having a larger inside diameter than the other socket portion. The centering pin 28 is inserted in the front portion of the socket 30 with a clearance formed around the pin in the socket.

An annular centering seat 32 is fitted in the rear portion of the seat accommodating portion 30a of the pin socket 30 and secured by a retaining ring 33. The inner periphery of the centering seat 32 is in the form of a tapered surface 32a flaring rearward.

A bush 35, a coiled compression spring 36 serving as an elastic member for biasing the bush 35 forward, and a stopper 37 for the bush 35 are provided inside a case 34 fitted in the rear portion of the pin socket 30, whereby a centering unit 38 is formed. The case 34 is in the form of a hollow cylinder having front and rear open ends and has an inward front flange 34a integral with the open front end and approximately equal to the rear end of the centering seat 32 in inside diameter. The open rear end of the case 34 is integrally formed with an inward rear flange 34b which is smaller than the front flange 34a in inside diameter. These flanges 34a, 34b serve to prevent the members 35 to 37 from slipping off. The rear flange 34b is in contact with the circumferential bottom wall of the pin socket 30, and the front flange 34a with the rear end face of the centering seat 32. The stopper 37 is in the form of a hollow cylinder and is fitted in the case 34 in intimate contact therewith except at the front end portion thereof.

The centering pin 28 extends into the case 34 through the centering seat 32 and the front flange 34a of the case 34 and is axially slidably inserted through the bush 35. The bush 35 has an outward flange 35a at its rear end. The flange portion 35a of the bush 35 has an outside diameter which is smaller than the inside diameter of the case and larger than the inside diameter of the front flange 34a. The portion of the bush 35 other than the flange 35a has an outside diameter slightly smaller than the inside diameter of the front flange 34a. The outer periphery of front part of this portion provides a spherical portion 35b. The flange 35a of the bush 35 is fitted in the case 34 and positioned between the front flange 34a and the stopper 37. The front portion of the bush 35 extends through the front flange 34a to project forward. The bush 35 is movable between a front limit position where the flange 35a bears on the rear face of the front flange 34a and a rear limit position in which the flange 35a bears on the front end face of the stopper 37. The spherical portion 35b of the bush 35 is pressed into contact with the tapered surface 32a of the centering seat 32 by the spring 36.

The case 34 is filled with grease.

The bush 35 may be an integral piece or circumferentially divided into a plurality of, preferably three, segments 35c as shown in FIG. 3. When the spherical portion 35b is pressed against the tapered surface 32a of the centering seat 32 in the latter case, the divided segments 35c can be reliably pressed into contact with the seat tapered surface 32a and with the outer peripheral surface of the centering pin 28 owing to a wedging action.

The space around the centering pin 28 in the seat accommodating portions 30a of the pin socket 30 is sealed off by an oil seal 39 which is disposed in the part of the accommodating portion to the front of the retaining ring 33. The oil seal 39 comprises a metal frame 39a placed in the accommodating portion 30a by a press fit, a rubber lip 39b secured to the inner periphery of the metal frame 39a, and a synthetic resin ring 39c secured to the inner peripheral rear portion of the lip 39b and slidable in contact with the centering pin 28.

The centering pin 28 is so positioned by the first bolts 12 that the axis thereof is in alignment with the axis of the output shaft 1. When free of deflection, the axis of the output shaft 1 and the axis of the interconnecting shaft 2 are in alignment with each other at all times. If otherwise, these axes intersect each other at the center point of the spherical portion 35b of the bush 35 having the centering pin 28 inserted therethrough. Thus, the centering mechanism performs its contemplated function.

With the flexible coupling described above, the rotation of the output shaft 1 is transmitted to the interconnecting shaft 2 via the flange 4, first flange member 6, first bolts 12, elastic members 21 in the first apertures 19, coupling member body 8a, elastic member 21 in the second apertures 20, second bolts 16 and second flange member 7. The torque pulsation occurring on the output shaft side is absorbed by the elastic deformation of the elastic members 21 in the direction of revolution thereof. Further the axial vibration, impact or the like of the output shaft 1 and the interconnecting shaft 2 relative to each other is absorbed by the axial elastic deformation of the elastic members 21. Furthermore, the centering pin 28, the bush 35 and the centering seat 32 perform the centering function, ensuring smooth transmission of rotation free of axial deflection. At this time, the spherical portion 35b of the bush 35 is always in pressing contact with the tapered surface 32a of the centering seat 32 without backlashing, consequently eliminating striking noise that would occur owing to vibration. Especially when the bush 35 is divided, the divided segments 35c come into tight pressing contact with the tapered surface 32a of the centering seat 32 and with the outer peripheral surface of the centering pin 28 owing to a wedging action to obviate backlashing more reliably. Even if the spring 36 is broken or damaged, the front flange 34a of the case 34 and the stopper 37 prevent the bush 35 from moving greatly to assure the contemplated centering function.

During the transmission of rotation described above, usual axial vibration or impact is absorbed by the elastic deformation of the elastic members 21, whereas if an excessive load acts in a direction to move the output shaft 1 and the interconnecting shaft 2 away from each other for one cause or another, the stoppers 26, 27 come into contact with the coupling member body 8a to restrain further deformation of the elastic members 21. If an excessive load acts in a direction to move the output shaft 1 and the interconnecting shaft 2 toward each other, the arms 9, 13 of the two flange members 6, 7 come into contact with the coupling member body 8a, restraining the elastic members 21 from further deformation.

In the case of the first embodiment, the front and rear flanges 34a, 34b of the case 34 prevent the bush 35 and the spring 36 from slipping off. The centering mechanism can be assembled easily merely by separately assembling the centering unit 38 and fitting the case 34 into the pin socket 30. When the centering pin 28 is withdrawn from the case 34, the bush 35 is restrained by contact with the front flange 34a and is therefore similarly prevented from slipping off.

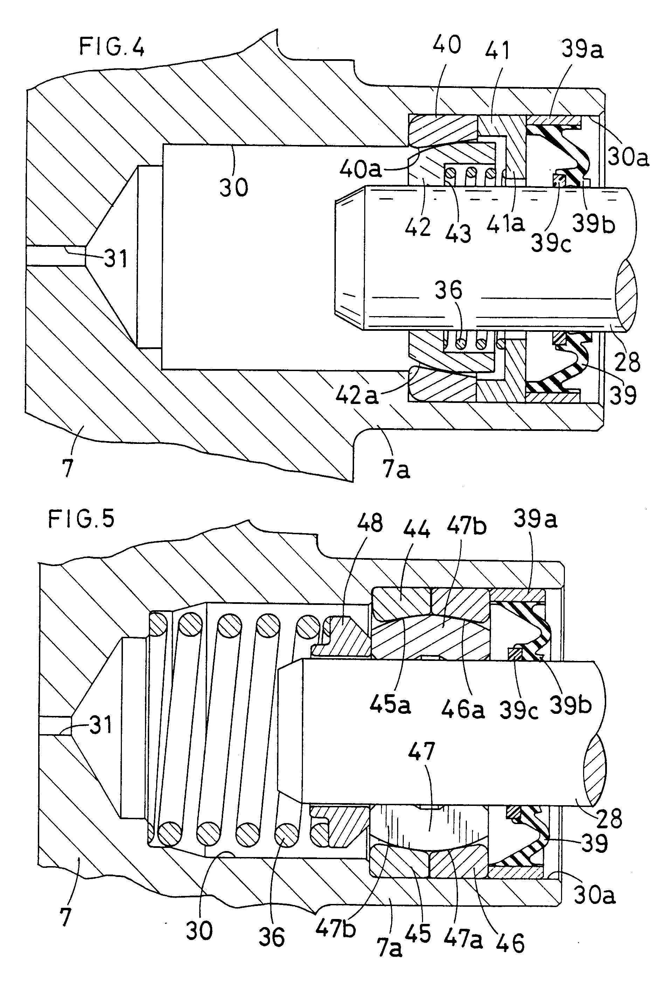

FIG. 4 shows on an enlarged scale the centering mechanism of another embodiment.

In the case of the second embodiment, a centering seat 40, stopper 41 and oil seal 39 are fitted, as arranged from the rear forward, in the seat accommodating portion 30a of the pin socket 30. A tapered surface 40a flaring forward is formed on the inner periphery of the centering seat 40. The stopper 41 is in the form of a short hollow cylinder approximately equal to the front end of the seat 40 in inside diameter and is provided with an inward flange 41a at its front end. The centering pin 28 extends through the oil seal 39, stopper 41 and centering seat 40 into the pin socket 30 and is axially slidably inserted through a bush 42. The bush 42 has a spherical portion 42a providing the outer periphery of its rear portion and a counterbore 43 inside its front portion. Disposed between the bush rear wall defining the counterbore 43 and the stopper flange 41a is a coiled compression spring 36 for biasing the bush 42 rearward to press the spherical portion 42a into contact with the tapered surface 40a of the centering seat 40. The second embodiment has the same construction as the first except the above feature.

FIG. 5 shows the centering mechanism of another embodiment on an enlarged scale.

In the case of the third embodiment, the seat accommodating portion 30a of the pin socket 30 has fitted therein a centering seat 44 and an oil seal 30 in front thereof. The centering seat 44 comprises axially divided two portions (first and second seat pieces) 45, 46, which are held between the rear wall of the seat accommodating portion 30a and the oil seal 39. The first seat piece 45 in the rear has on its inner periphery a tapered surface 45a flaring forward, while the second seat piece 46 on the front side has an inner tapered surface 46a flaring rearward. Thus, the overall inner peripheral surface of the centering seat 44 is recessed to define a space constricted at the front and rear ends of the seat 44. The centering pin 28 extends through the oil seal 39 and the centering seat 44 into the pin socket 30 and is axially slidably inserted through a bush 47. The entire outer periphery of the bush 47 forms a spherical portion 47a having a reduced outside diameter at its front and rear ends. The spherical portion 47a is fitted to the two tapered surfaces 45a, 46a of the centering seat 44 so as to contact these surfaces 45a, 46a at a specified angle. The bush 47 comprises circumferentially divided three segments 47b. A washer 48 is axially slidably fitted around the centering pin 28 at a portion thereof rearward from the bush 47. A coiled compression spring 36 for biasing the washer 48 forward is provided between the rear face of the washer 48 and the bottom wall of the pin socket 30. The spring 36 presses the front face of the washer 48 into contact with the rear end face of the bush 47, whereby the spherical portion 47a of the bush 47 is pressed mainly against the tapered surface 46a of the second seat piece 46. The third embodiment has the same construction as the first except the feature described above.

According to the third embodiment, the bush 47 is enclosed with the two tapered surfaces 45a, 46a which are combined together to form the recessed inner surface of the centering seat 44 and is therefore prevented from projecting from inside the seat 44 even if the spring 36 is broken or damaged. This ensures the usual centering function. Further since the bush 47 comprises the circumferentially divided three segments 47b, the spherical portion 47a can be reliably held in pressing contact with the tapered surface 46a of the centering seat 44 to completely obviate any backlash and striking noise. However, the bush can be an integral piece when the striking noise is small, if any. Although the inner peripheral surface of the centering seat 44 is recessed by the two tapered surfaces 45a, 46a according to the present embodiment, the recessed surface may be formed by spherical surfaces.

## Claims

1. A flexible coupling for coupling a first shaft to a second shaft, comprising:
- elastic body means (8) interposed between the first and second shafts (1,2) for effecting torque transmission between the first and second shafts and for absorbing vibration;
- a first flange member (6) attached to the first shaft (1), said first flange member including a centering pin (28);
- a second flange member (7) attached to the second shaft (2), said second flange member having a pin socket (30) therein, said centering pin being received in said pin socket and said pin socket being formed to provide a clearance around said pin;
- an annular centering seat (44) axially fixed in said pin socket (30), said annular centering seat having an inner peripheral portion (45a,46a) recessed so as to have a smaller diameter at each axial end thereof than at a center portion thereof, said annular centering seat (44) being axially divided into two pieces (45,46).
- a bushing (47) having an outer peripheral portion having a spherical portion (47a), said centering pin (28) being axially, slidably inserted through said bushing, said spherical portion (47a) being fitted in bearing contact with said recessed inner peripheral portion of said centering seat (44); and
- elastic biasing means (36) provided between said bushing (44) and said pin socket (30) for axially biasing said bushing to press said spherical portion (47a) of said bushing into tight contact with said inner peripheral portion (45a,46a) of said centering seat (44),
**characterized** in that said two pieces (45,46) have an inner peripheral portion having a tapered surface (45a,46a), such, as to form a space contricted at the forward and the rearward end of the seat (44),
said bushing (35,47) being circumferentially divided into a plurality of segments (47b), and
said elastic biasing means (36) axially biasing each of said segments (47b) of said bushing (47) to press said spherical portion (47a) of the segments into tight contact with said tapered surface (45a,46a) of said inner peripheral portion of said centering seat (44) owing to a wedging action.

2. Flexible coupling as claimed in claim 1, further comprising a stopper (41) for said bushing (35,47), said stopper being disposed inside said pin socket (30).

## Patentansprüche

1. Elastische Kupplung zur Verbindung einer ersten Welle und einer zweiten Welle, mit:
- einem elastischen Körper (80) in der ersten und der zweiten Welle (1,2) zur Drehmomentübertragung zwischen der ersten und zweiten Welle und zur Absorption von Schwingungen;
- einem ersten Flanschglied (6), das an der ersten Welle (1) angebracht ist und einen Zentrierstift (28) aufweist;
- einem zweiten Flanschglied (7), das an der zweiten Welle (2) angebracht ist und eine Stiftmuffe (30) aufweist, die den Zentrierstift aufnimmt und so ausgebildet ist, daß um den Stift herum ein Abstand besteht;
- einem ringförmigen Zentriersitz (44), der axial an der Stiftmuffe (30) befestigt ist, welcher ringförmige Zentriersitz einen inneren Umfangsbereich (45a,46a) aufweist, der derart ausgenommen ist, daß er an jedem axialen Ende einen kleineren Durchmesser als im Mittelbereich aufweist, welcher ringförmige Zentriersitz (44) axial in zwei Teile (45,46) unterteilt ist;
- einer Buchse (47) mit einem äußeren Umfangsbereich, der einen kugelförmigen Bereich (47a) aufweist, wobei der Zentrierstift (28) axial verschiebbar in die Buchse eingefügt ist, welcher kugelförmige Bereich (47a) in Lagerkontakt mit dem ausgenommenen inneren Umfangsbereich des Zentriersitzes (44) steht; und
- einer elastischen Vorspanneinrichtung (36) zwischen der Buchse (44) und der Stiftmuffe (30) zur axialen Vorspannung der Buchse, so daß der kugelförmige Bereich (47a) der Buchse in enge Berührung mit dem inneren Umfangsbereich (45a,46a) des Zentriersitzes (44) gepreßt wird,
dadurch **gekennzeichnet**, daß die zwei Teile (45,46) einen inneren Umfangsbereich mit abgeschrägten Oberflächen (45a,46a) aufweisen, derart, daß ein am vorderen und hinteren Ende des Sitzes (44) eingeschnürter Raum gebildet wird,
daß die Buchse (35,47) in Umfangsrichtung in eine Anzahl von Segmenten (47b) unterteilt ist, und
daß die elastische Vorspanneinrichtung (36) jedes der Segmente (47b) der Buchse (47) so axial vorspannt, daß der kugelförmige Bereich (47a) der Segmente in enge Berührung mit der schrägen Oberfläche (45a,46a) des inneren Umfangsbereichs des Zentriersitzes (44) aufgrund der Keilwirkung gepreßt wird.

2. Flexible Kupplung nach Anspruch 1, mit einem Anschlag (41) für die Buchse (35,37), der innerhalb der Stiftmuffe (30) angeordnet ist.

## Revendications

1. Accouplement souple pour relier un premier arbre à un second arbre, comprenant :
- un moyen formant corps élastique (8) intercalé entre les premier et second arbres (1, 2) pour réaliser la transmission de couple entre les premier et second arbres et pour absorber les vibrations ;
- un premier élément formant bride (6) fixé au premier arbre (1), ledit premier élément formant bride comprenant un goujon de centrage (28) ;
- un second élément formant bride (7) fixé au second arbre (2), ledit second élément formant bride ayant une douille de goujon (30) à l'intérieur, ledit goujon de centrage étant reçu dans ladite douille de goujon et ladite douille de goujon étant formée pour donner un jeu autour dudit goujon ;
- une portée de centrage annulaire (44), fixée, de manière axiale, dans ladite douille de goujon (30), ladite portée de centrage annulaire ayant une partie périphérique intérieure (45a, 46a) évidée de façon à avoir un diamètre plus petit, au niveau de chaque extrémité axiale de cette dernière, qu'au niveau de la partie centrale de cette dernière, ladite portée de centrage annulaire (44) étant divisée, de façon axiale, en deux éléments (45, 46) ;
- un manchon (47) possédant une partie périphérique extérieure ayant une partie sphérique (47a), ledit goujon de centrage (28) étant inséré, de manière axiale et de façon à pouvoir coulisser, à travers ledit manchon, ladite partie sphérique (47a) étant ajustée en contact formant coussinet avec ladite partie périphérique intérieure évidée de ladite portée de centrage (44) ; et
- un moyen de poussée élastique (36) disposé entre ledit manchon (44) et ladite douille de goujon (30) pour pousser, de manière axiale, ledit manchon, pour presser ladite partie sphérique (47a) dudit manchon en contact étroit avec ladite partie périphérique intérieure (45a, 46a) de ladite portée de centrage (44),
caractérisé en ce que lesdits deux éléments (45, 46) ont une partie périphérique intérieure ayant une surface conique (45a, 46a), de façon à former un espace rétréci au niveau de l'extrémité avant et de l'extrémité arrière de la portée (44),
ledit manchon (35, 47) étant divisé, sur la circonférence, en une pluralité de segments (47b), et
ledit moyen de poussée élastique (36) poussant, de façon axiale, chacun desdits segments (47b) dudit manchon (47) pour presser ladite partie sphérique (47a) des segments en contact étroit avec ladite surface conique (45a, 46a) de ladite partie périphérique intérieure de ladite portée de centrage (44) imputable à une action de calage.

2. Accouplement souple selon la revendication 1, comprenant, de plus, une butée (41) pour ledit manchon (35, 47), ladite butée étant disposée à l'intérieur de ladite douille de goujon (30).
